# EUROPÄISCHE PATENTSCHRIFT

(11) **EP 2 215 431 B1**
(45) Veröffentlichungstag und Bekanntmachung des Hinweises auf die Patenterteilung: **04.05.2016**
(21) Anmeldenummer: 08853938.2
(22) Anmeldetag: 04.11.2008
(51) Int. Cl.: G01D 5/245

(54) **DREHGEBER MIT INTERNER FEHLERKONTROLLE UND VERFAHREN HIERZU**
ROTARY ENCODER COMPRISING INTERNAL ERROR CONTROL AND METHOD THEREFOR
CAPTEUR DE ROTATION À CONTRÔLE DES ERREURS INTERNE ET PROCÉDÉ CORRESPONDANT

(30) Priorität: 26.11.2007 DE 102007057376
(43) Veröffentlichungstag der Anmeldung: 11.08.2010
(73) Patentinhaber: Baumer Hübner GmbH, 10967 Berlin (DE)
(72) Erfinder: HILLER, Bernhard, 13465 Berlin (DE); WILHELMY, Jochen, 10967 Berlin (DE); KIRCHBERGER, Roland, 10787 Berlin (DE)
(74) Vertreter: Strauss, Steffen
(86) Internationale Anmeldenummer: PCT/EP2008/009281
(87) Internationale Veröffentlichungsnummer: WO 2009/068156

(56) Entgegenhaltungen:
- EP-A- 0 883 249
- WO-A-2004/051192
- US-A1- 2006 025 959

## Beschreibung

Die Erfindung betrifft ein Verfahren zum Überprüfen der Funktionsfähigkeit eines Drehgebers während seines Betriebs, wobei bei dem Verfahren mindestens ein Paar von zueinander phasenverschobenen, für einen Drehwert, wie etwa eine Winkellage einer Achse, repräsentativen Messsignalen mit wenigstens einer im Drehgeber gespeicherten Referenzinformation verglichen wird, wobei Amplitudenwerte des Messsignalpaars im Drehgeber zu einem Kennwert zusammengefasst werden und dem Kennwert wenigstens eine Referenzinformation zugeordnet wird, die im Drehgeber als ein Qualitätswert gespeichert ist und die zulässige Amplitudenwertkombinationen repräsentiert, und in Abhängigkeit vom Qualitätswert ein Überwachungssignal ausgegeben wird.

Die Erfindung betrifft ferner einen Drehgeber, in dem eine Sensoreinheit, durch welche im Betrieb wenigstens ein Paar von sinusförmigen, relativ zueinander phasenverschobenen Messsignalen erzeugbar ist, und eine Überwachungseinheit, die mit der Sensoreinheit messsignalübertragend verbunden ist und durch die im Betrieb zumindest ein für die Funktionsfähigkeit des Drehgebers repräsentatives Überwachungssignal ausgebbar ist, integriert sind, wobei in der Überwachungseinheit ein Rechenmodul, durch das aus dem Messsignalpaar ein Kennwert erzeugbar ist, eine Speichereinheit, in der wenigstens ein Qualitätswert speicherbar ist, eine Verifizierungseinrichtung, durch die dem Kennwert ein Qualitätswert zuordenbar ist, und eine Alarmeinheit, die in Abhängigkeit des Ergebnisses der Zuordnung durch die Verifizierungseinrichtung steuerbar und in der das Überwachungssignal generierbar ist, vorgesehen sind.

Drehgeber sind allgemein bekannt und werden vielfach zur Bestimmung von Drehwerten bei geregelten Antrieben eingesetzt. Tritt im Drehgeber oder in einer signalleitenden Verbindung zwischen dem Drehgeber und einer Empfangseinheit für dessen Signale ein Fehler auf, kann ohne Weiteres nicht festgestellt werden, ob die Fehlerquelle in der Verbindung oder im Drehgeber zu suchen ist oder ob sich der überwachte Drehwert unerwartet geändert hat.

Ein Fehler in der Verbindung kann beispielsweise eine kurzgeschlossene Signalübertragungsleitung sein. Im Drehgeber können mehrere potenzielle Fehlerquellen vorhanden sein. So können sich bewegliche und auch nicht bewegliche Teile, wie etwa Magnete, Lichtquellen, Sensoren oder Inkrementalscheiben aus ihrer vorgesehenen Position lösen und womöglich miteinander kollidieren. Auch können Komponenten im Drehgeber im Laufe der Zeit oder kurzfristig verschmutzen.

Die Fehler erzeugen oft bereits vor dem Ausfall des Drehgebers Änderungen in den in der Sensoreinheit erzeugten Messsignalen. Durchlaufen die Messsignale, die sinusförmig und paarweise erzeugt werden und eine feste Phasenbeziehung zueinander aufweisen, im Drehgeber Signalverarbeitungskomponenten, können auch diese ausfallen. Auch können sonstige elektrische, mechanische oder thermische Ursachen eines der oben genannten Fehlerbilder hervorrufen.

Um nun eine Fehlerquelle identifizieren und so gezielt Gegenmaßnahmen ergreifen zu können, lehren die EP 0 883 249 B1 und EP 1 006 663 B1, dass die Maxima der beiden Amplituden der sich mit dem Drehwert ändernden Messsignale jeweils mit vorgegebenen Maximalwerten einzeln verglichen werden. Verschmutzt beispielsweise ein transparenter Bereich einer Inkrementalscheibe, sinkt die Amplitude des Messsignals und der vormals erreichte maximale Pegel des Messsignals wird nicht mehr erreicht. In der WO 2004/051192A2 und der US 2006/0025959A1 werden hingegen aktuelle Werte der Messsignale kombiniert mit Grenzwerten verglichen.

Werden die Messsignale in Rechtecksignale gewandelt, haben die Rechtecksignale oftmals eine Amplitude, die in Grenzen unabhängig ist von der erreichbaren Maximalamplitude des dem Rechtecksignal zugrunde liegenden Messsignals. Daher lehrt die EP 1 006 663 B1, dass die ordnungsgemäße Funktion einer Signalverarbeitungs- bzw. -umformungseinrichtung, die aus sinusförmigen Messsignalen Rechtecksignale bildet, anhand der Anzahl oder der Sequenz der Rechtecke oder der Flanken des Rechtecksignals bestimmt werden kann. Mehrere Rechtecksignale können so kombiniert werden, dass die Sequenz der Rechtecke bzw. derer Flanken bei einer Änderung des Drehwertes, wie etwa einer Drehung um einen Winkel in einer gewissen Zeit, ein vorbestimmtes Muster aufweist. Weicht die Messung von diesem vorgegebenen Muster ab, können daraus Rückschlüsse auf die Fehlerquelle gezogen werden.

Zur Erkennung von beispielsweise kurzgeschlossenen Signalleitungen ist der EP 1 006 663 B1 zu entnehmen, dass der Ausgangsstrom des Drehgebers gemessen wird. Es wird gezeigt, dass im Signalausgang ein niederohmiger Widerstand mit der Signalleitung in Reihe geschaltet ist. Fließt ein elektrischer Strom durch diesen Widerstand, fällt an ihm nach dem ohmschen Gesetz eine entsprechende Spannung ab, die gemessen wird. Steigt der Stromfluss infolge eines Kurzschlusses in beispielsweise einer externen Signalübertragungsleitung an, steigt auch die Spannung, die über dem Widerstand abfällt, was erkannt und ausgewertet wird. Auch kann ein elektrischer Widerstand, der seinen Widerstandswert mit steigender Temperatur erhöht, sich mit einem steigenden Stromfluss durch ihn erwärmen. Folglich steigt der Widerstandswert dieses Widerstandes an, wodurch der Stromfluss begrenzt wird. Es können auch beispielsweise passive Sicherungen verwendet werden, um, wie oben, bei einem Kurzschluss die Signalübertragung zu unterbrechen.

Die beschriebenen Vorgehensweisen haben jedoch den Nachteil, dass sich der Drehgeber drehen muss, damit die Messungen durchgeführt werden können. Einerseits liegen die Maximalamplituden der Messsignale nur in Ausnahmefällen an der zum Beispiel Sensoreinheit an, andererseits kann die Anzahl der Flanken des Rechtecksignals nur gezählt werden, wenn diese auch erzeugt werden. Auch dazu muss sich der Drehgeber drehen bzw. muss der bewegliche Teil, wie etwa die Inkrementalscheibe, die mit der Drehachse verbunden ist, von dieser gedreht werden.

Auch werden unterschiedliche Signale, beispielsweise die sinusförmigen Messsignale und die abgeleiteten Rechtecksignale, unterschiedlich ausgewertet. Dies erhöht die Komplexität und somit die Kosten eines Drehgebers.

Daher ist es die Aufgabe der vorliegenden Erfindung, einen Drehgeber mit einer internen Fehlerkontrolle und ein Verfahren hierzu bereitzustellen, bei dem die Funktion des Drehgebers auch festgestellt werden kann, wenn ein konstanter Drehwert, beispielsweise eine konstante Winkellage, am Drehgeber anliegt.

Für das eingangs genannte Verfahren wird diese Aufgabe erfindungsgemäß dadurch gelöst, dass die Amplitudenwerte digitalisiert und zur Adressierung eines zumindest zweidimensionalen Kennfeldes verwendet werden, in dem Qualitätswerte abgelegt sind.

Die Aufgabe wird für den eingangs genannten Drehgeber dadurch gelöst, dass der Kennwert einer Kennwertspeicheradresse eines wenigstens zweidimensionalen und in der Speichereinheit vorgesehenen Kennfeldes entspricht, wobei im Kennfeld Qualitätswerte abgelegt sind.

Durch diese Maßnahmen ist es möglich, die Funktion des Drehgebers im Betrieb jederzeit, insbesondere auch bei Stillstand in irgendeiner Winkellage, zu kontrollieren, da immer Amplitudenwerte zur Verfügung stehen, aus denen der eine Kennwert gebildet werden kann.

Die erfindungsgemäße Lösung kann durch verschiedene jeweils für sich vorteilhafte, beliebig miteinander kombinierbare Ausgestaltungen weiter verbessert werden. Auf diese Ausgestaltungsformen und die mit ihnen verbundenen Vorteile wird im Folgenden eingegangen.

So können die Amplitudenwerte des Messsignalpaares über eine arithmetische Funktion miteinander verknüpft werden. Liegt das Messsignalpaar als zwei sinusartige Signale, die untereinander einen Phasenversatz von 90° aufweisen vor, kann eines der Messsignale als Sinussignal und das andere Messsignal als Kosinussignal bezeichnet werden. Beinhaltet die arithmetische Funktion, dass die Amplitudenwerte der Messsignale quadriert und die Ergebnisse addiert werden, ist die ermittelte Summe konstant und zwar für alle im Betrieb des Drehgebers möglichen Drehwerte.

Da die Summe, im Folgenden Kennwert genannt, insbesondere auch im Stillstand des Drehgebers konstant ist, braucht der Drehgeber keine Relativbewegung auszuführen, um sich selbst zu kontrollieren. Ist der Amplitudenwert eines der Messsignale korrekt und maximal und ist der Amplitudenwert des zweiten Messsignals ebenfalls richtig und gleich null, so wird auch dann ein Kennwert ermittelt, der eine ordnungsgemäße Funktion des Drehgebers repräsentiert. In diesem Fall ist jedoch womöglich eine Beeinträchtigung, beispielsweise einer optischen Komponente, die an der Generierung des zweiten Messsignals beteiligt ist, nicht erkennbar.

Weichen die aktuellen Amplitudenwerte des Messsignalpaars jedoch von vorgegebenen Amplitudenwerten ab und sind sie insbesondere größer oder kleiner als die Vorgabe, ändert sich der Kennwert entsprechend und lässt Rückschlüsse auf Defekte oder Verschmutzungen innerhalb des Drehgebers zu.

Eine Veränderung des einen Kennwertes kann auch auf eine Alterung oder Lockerung von an der Signalerzeugung beteiligten Komponenten, wie etwa LEDs oder Magneten und eine folgende Positionsveränderung der Komponenten hindeuten. Wird der Kennwert größer, so können sich die oben genannten gelockerten Komponenten aufeinander oder auf andere Komponenten zu bewegen, was letztendlich im Betrieb des Drehgebers zu einer Beschädigung durch Zusammenstoß führen kann.

Es kann jedoch auch möglich sein, dass der Drehgeber auch mit beeinträchtigten Amplitudenwerten des Messsignalpaars noch gut funktioniert, weil beispielsweise die Teile mit der maximal zulässigen Toleranz zusammenwirken. Die ermittelten Kennwerte eines solchen Drehgebers können vom idealen, konstanten Kennwert abweichen, ohne dass ein Fehler vorliegt. Daher ist es von Vorteil, wenn die ermittelten Kennwerte mit im Drehgeber gespeicherten, individuellen Qualitätswerten verglichen werden. Diese Qualitätswerte können eine uneingeschränkte Funktion des spezifischen Drehgebers repräsentieren. Auch können zusätzliche Qualitätswerte definiert sein, die nur eine eingeschränkte Funktion des Drehgebers repräsentieren. So kann es sein, dass beispielsweise optische Komponenten im Laufe des Betriebs immer stärker verschmutzen, so dass der Drehgeber im Augenblick noch gut funktioniert, sein Ausfall jedoch absehbar ist. Für diesen Fall können Qualitätswerte vorgesehen sein, deren Wert zwischen dem Wert eines für einen Funktionsausfall repräsentativen und eines eine uneingeschränkte Funktionsfähigkeit repräsentativen Qualitätswertes liegen. Qualitätswerte können somit einen Zustand des Drehgebers repräsentieren, in dem der Drehgeber nicht mehr oder gerade noch funktioniert.

Um nicht alle möglichen Qualitätswerte abspeichern zu müssen, können die Qualitätswerte als Schwellwerte im Drehgeber vorhanden sein. Somit ist nur noch zu prüfen, ob sich ein Kennwert in einem von den Schwellwerten begrenzten Intervall befindet.

Die Qualitätswerte können, beispielsweise in einem Selbstlernverfahren, im Drehgeber selbst ermittelt werden. Dazu können die Kennwerte oder eine Anzahl an Kennwerten zu einem Zeitpunkt, wie etwa zur Erstinbetriebnahme oder zu Wartungen, im Drehgeber gesammelt und ausgewertet werden. So lassen sich beispielsweise Veränderungen der Messsignale genauer ermitteln und in den Qualitätswerten wiedergeben.

Ein solches Selbstlernverfahren kann dann sinnvoll sein, wenn der ansonsten fehlerfreie Drehgeber nicht einem idealen Drehgeber entspricht, beispielsweise die Messsignale eines Messsignalpaars unterschiedliche Maximalamplituden aufweisen oder deren Phasenversatz von vorgegebenen Werten abweicht. Eine Ursache für dieses Verhalten kann in der Verwendung unterschiedlich leuchtender LEDs, unterschiedlich empfindlicher Detektoren oder nicht genau gefertigter oder montierter Maßverkörperungen liegen. Dies kann beispielsweise der Fall sein, wenn etwa LEDs verwendet werden, die unterschiedlich stark leuchten, Detektoren unterschiedlich empfindlich sind oder die Inkrementalscheibe nicht perfekt gefertigt oder montiert ist.

Bei einem solchen Drehgeber kann beispielsweise bei der ersten Inbetriebnahme des Drehgebers eine vorbestimmte Mindestanzahl von Kennwerten aufgenommen werden. Diese Kennwerte werden im Drehgeber bewertet und anhand von vorgegebenen Auftrittswahrscheinlichkeiten können dann die Qualitätswerte abgeleitet werden. Die Qualitätswerte werden so auf den Drehgeber individuell geeicht.

Um die Qualitätswerte noch besser an jeden Drehgeber anpassen zu können, können die Qualitätswerte, wie auch die Amplitudenwerte des Messsignalpaars, vom Drehwert abhängig sein. Eine besonders vorteilhafte weil einfache Darstellung der Qualitätswerte eines perfekten Drehgebers erhält man, wenn man alle auftretenden Amplitudenwerte der Messsignale des Messsignalpaars jeweils auf einer Achse eines Koordinatensystems aufträgt. Hier kann man beispielsweise eines der Messsignale des Messsignalpaares auf die eine, hier X genannte Achse und das zweite Messsignal auf die zweite, hier Y genannte Achse auftragen. Werden die Amplitudenwertvektoren addiert, erhält man Kennwerte, die für alle Kennwerte im Koordinatensystem einen Ring mit einem konstanten Radius, dessen Betrag der Summe der Amplitudenquadrate entspricht, bilden, dessen Mittelpunkt mit dem Ursprung des Koordinatensystems zusammenfällt.

Weichen die Amplitudenwerte schon im unbeeinträchtigen Zustand des Drehgebers von den perfekten Amplitudenwerten ab oder entspricht die Phase der beiden Signale des Messsignalpaares nicht der Vorgabe, ändert sich die Form des Rings, beispielsweise in eine Ellipse. Dies kann bei der Eichung des Drehgebers berücksichtigt werden.

Weitere Schwankungen bzw. Abweichungen der Messsignale, die beispielsweise durch eine Verschmutzung hervorgerufen werden können, verbreitern in dieser Darstellungsweise die Linien, die durch den Ring bzw. die Ellipse begrenzt werden, und es entstehen Qualitätswertintervalle.

Weicht ein Kennwert unerwartet vom Qualitätswert ab, dann liegt er neben dem verbreiterten Rand des Rings bzw. der Ellipse, der gute Qualitätswerte enthält. Auch hier können mehrere ring- oder ellipsenförmige Bereiche, die durch unterschiedliche Qualitätswerte repräsentiert werden können, unter anderem die Funktionszustände des Drehgebers "gut", "noch gut" oder auch "nicht gut" repräsentieren.

Wird das Messsignalpaar beispielsweise in digitalisierter Form verarbeitet, können dessen Amplitudenwerte diskreten Repräsentationswerten, beispielsweise in Form von Binärzahlen, zugeordnet werden. Diese Repräsentationswerte werden wieder zum Kennwert zusammengefasst, der in einer weiteren Ausgestaltung als eine Kennwertspeicheradresse verwendet wird. Unter der Kennwertspeicheradresse ist ein für den Funktionsstatus, wie etwa "gut", "noch gut" oder "nicht gut" des Drehgebers, repräsentativer Wert gespeichert, der beispielsweise je nach Status einen anderen binären Code aufweisen kann. Dieser Wert, der dem bisherigen Qualitätswert entspricht, wird aus einem digitalen Speicher ausgelesen und ausgewertet. Die Speichereinrichtung kann insbesondere Teil der Verifikationseinrichtung sein.

Ein besonders vorteilhaftes, weil einfaches Verfahren zur Darstellung der digitalisierten Amplitudenwerte ist gegeben, wenn die beiden Repräsentationswerte zur Adressierung der Spalten und Zeilen eines Speichers verwendet werden. Die berechnete Speicheradresse stellt den Kennwert dar. Im Adressraum des Speichers sind zulässige Qualitätswerte wieder im beschriebenen Ellipsenring bzw. Kreisring abgelegt. Der Funktionsstatus des Drehgebers entspricht dem Inhalt des adressierten Speicherplatzes.

Der Kennwert kann auch durch eine andere Kombination der beiden digitalisierten Amplitudenwerte berechnet werden. So können beispielsweise die "guten" und die "noch guten" Qualitätswerte den gesamten Adressraum des Speichers füllen. Repräsentieren die Amplitudenwerte einen Funktionszustand des Drehgebers der "nicht gut" ist, so kann die Kennwertspeicheradresse hier als "nicht guter" Qualitätswert außerhalb des definierten Bereichs liegen und entsprechend interpretiert werden.

Wird das Messsignalpaar im Drehgeber in ein Paar von Rechtecksignalen überführt, kann auch die Funktion einer die Überführung durchführende Signalumformungseinrichtung anhand der Amplitudenwerte der beiden Rechtecksignale kontrolliert werden. Dabei wird jeweils der Amplitudenwert eines der beiden Rechtecksignale gegen einen Qualitätswert geprüft. Die Form der Rechtecksignale mit zumindest abschnittsweise im Wesentlichen konstanten Amplitudenwerten ermöglicht ein Verfahren in dem zumindest geprüft wird, ob das Rechtecksignal entweder größer als ein oberer oder kleiner als ein unterer Qualitätswert ist.

Welches der Rechtecksignale wie gegen welchen Qualitätswert geprüft wird, wird in der Überwachungseinheit in Abhängigkeit von den Amplitudenwerten des Messsignalpaares bzw. vom Kennwert entschieden. Ändert sich die Winkellage, ändern sich die Amplitudenwerte sowohl des Messsignalpaares als auch des Rechtecksignalpaares entsprechend. Dabei durchlaufen die Signalpaare vier Sektoren, die durch Sektorgrenzen begrenzt sind. Die Sektorgrenzen können durch vom Betrag gleicher Amplitudenwerte des Messsignalpaares definiert sein. Es sind auch andere Paarungen von Amplitudenwerten der beiden Messsignale des Messsignalpaars für die Definition der Sektorgrenzen möglich.

Zwischen zwei Sektorgrenzen kann insbesondere in Abhängigkeit vom Verhältnis der Amplitudenwerte der Messsignale des Messsignalpaars zueinander bestimmt werden, welches der Rechtecksignale wie und gegen welchen Qualitätswert geprüft wird.

Ist die Phase der Rechtecksignale in Bezug auf die ihnen zugrunde liegenden Messsignale ungleich Null, können die Sektorgrenzen mit dieser Phase verschoben sein.

Da auch hier aktuell anliegende Amplitudenwerte zur Funktionskontrolle des Drehgebers bzw. der in den Drehgeber integrierten Signalumformungseinrichtung herangezogen werden, funktioniert die Kontrolle auch bei einem Drehgeber im Stillstand.

Um auch kurzgeschlossene Signalübertragungsleitungen, die in einer Signalflussrichtung hinter dem Drehgeber diesen mit beispielsweise einer Auswerteeinheit für Drehgebersignale verbinden, zu erkennen, können auch hier die Amplitudenwerte der Signale oder der Signalpaare herangezogen werden. Da der Drehgeber das Messsignalpaar direkt und/oder als von diesen abgeleitetes Rechtecksignalpaar ausgibt, ist es von Vorteil, das im Folgenden beschriebene Verfahren auf beide Signaltypen anzuwenden.

Durch einen Kurzschluss zumindest einer der Signalübertragungsleitungen bricht in einer mit dem Signalausgang verbundenen Signalverarbeitungseinrichtung die Ausgangsspannung zusammen. Auch kann es sein, dass die Signalverarbeitungseinrichtung eine Weiterleitung des Signals gänzlich verhindert.

Werden nun in einer weiteren Ausgestaltung die Amplitudenwerte der Signale in Signalflussrichtung hinter der Signalverarbeitungseinrichtung einzeln oder als Kennwert paarweise zusammengefasst und mit den Amplitudenwerten bzw. Kennwerten der zugehörigen Signale oder Signalpaare vor der Signalverarbeitungseinrichtung verglichen, und weichen die Signale hinter der Signalverarbeitungseinrichtung mehr als erwartet von denen vor der Signalverarbeitungseinrichtung ab, kann so der Kurzschluss mindestens einer der Signalübertragungsleitung erkannt werden.

Erzeugt der Drehgeber mehr als ein Messsignalpaar und folglich gegebenenfalls auch mehr als ein Rechtecksignalpaar, können die hier beschriebenen Verfahren für jedes Signalpaar angewendet werden.

Anhand des Ergebnisses des Vergleichs der Kennwerte bzw. Amplitudenwerte mit den Qualitätswerten oder anderen Kenn- bzw. Amplitudenwerten kann der Drehgeber das vom Ergebnis abhängige Überwachungssignal ausgeben, das beispielsweise zu einer visuellen Anzeige mittels wenigstens einer auch mehrfarbigen LED oder zur Ausgabe an eine Steuereinheit, wie z. B. eine SPS, verwendet werden. Dabei kann das Überwachungssignal unter anderem die verschiedenen Funktionsstati "gut", "noch gut" oder "nicht gut" repräsentieren.

Ein Drehgeber zur Durchführung der oben beschriebenen Verfahrensschritte umfasst eine Überwachungseinheit, der zumindest ein Messsignalpaar und/oder auch wenigstens ein Rechtecksignalpaar zuführbar ist. Anhand der Amplitudenwerte der Signalpaare erzeugt die Überwachungseinheit das für die Funktion des Drehgebers repräsentative Überwachungssignal. Zur Erzeugung des Überwachungssignals umfasst die Überwachungseinheit zumindest ein Rechenmodul, eine Verifikationseinrichtung, eine Speichereinheit und eine Alarmeinheit.

Das Rechenmodul kann mit der Sensoreinheit so verbunden sein, dass die Messsignalpaare auch an das Rechenmodul übertragbar sind. Werden die Messsignalpaare in der ebenfalls im Drehgeber vorgesehenen Signalumformungseinrichtung, beispielsweise in Rechtecksignalpaare umgeformt, können auch diese z. B. über separate Signalleitungen zum Rechenmodul übertragbar sein. Im Rechenmodul ist ein Kennwert für jedes dem Modul zugeführte Signalpaar bestimmbar. Der Kennwert ist über Signalleitungen, die das Rechenmodul mit der Verifikationseinrichtung verbinden, übertragbar. Sollen mehrere Kennwerte übertragen werden, können diese über separate Leitungen oder eine gemeinsame Leitung, beispielsweise als ein Multiplexsignal, geleitet werden.

Der Verifikationseinrichtung ist vorzugsweise zumindest einer der Qualitätswerte aus der Speichereinheit zuführbar, den die Verifikationseinrichtung mit dem Kennwert vergleicht.

Der Verifikationseinrichtung können auch Amplitudenwerte, beispielsweise des Rechtecksignalpaars zuführbar sein, die hier mit den Qualitätswerten vergleichbar sind.

Auch der Speichereinheit können sowohl die Kennwerte vom Rechenmodul als auch Amplitudenwerte, wie etwa die Amplitudenwerte des Rechtecksignalpaars der Signalumformungseinheit, zuführbar sein.

In der Verifikationseinrichtung ist beispielsweise anhand des Vergleichs zumindest eines Kennwertes mit wenigstens einem Qualitätswert mindestens ein Verifikationssignal erstellbar, das der Alarmeinheit zuführbar ist, die durch das Verifikationssignal ansteuerbar ist. Anhand der Verifikationssignale ist in der die Alarmeinheit bis zu ein Überwachungssignal oder mehr pro Verifikationssignal generierbar. Die Überwachungssignale können einzeln an je einem Überwachungssignalausgang oder als mindestens zwei Überwachungssignale an wenigstens einen Signalausgang der Alarmeinheit anlegbar sein.

Des Weiteren kann die Überwachungseinheit auch eine Signalvergleichseinheit und eine Beschleunigungsmessvorrichtung umfassen, in denen ihrerseits Verifikationssignale erzeugbar sind, die zumindest der Alarmeinheit zuführbar sind. Der Signalvergleichseinheit können die Amplitudenwerte der Messsignalpaare und/oder der Rechtecksignalpaare von der Sensoreinheit oder der Signalumformungseinheit zuführbar sein. Zusätzlich können der Signalvergleichseinheit die Signalpaare, die am Ausgang des Drehgebers anliegen, zuführbar sein. Auch kann die Signalvergleichseinheit in der Verifikationseinrichtung integriert sein.

Die Alarmeinheit kann direkt mit einer Fehlerkontrollanzeige verbindbar sein, um den Funktionszustand des Drehgebers beispielsweise über wenigstens eine LED anzuzeigen. Alternativ kann das Überwachungssignal auch einer Datenverarbeitungseinrichtung, wie etwa einer Maschinensteuerungseinheit oder einer Überwachungssignalverarbeitungsvorrichtung zuführbar sein. Auch können anstatt der Übenrvachungssignale direkt die Verifikationssignale übertragbar sein.

Im Folgenden wird die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines ersten Ausführungsbeispiels der Erfindung;
- Fig. 2: eine schematische Darstellung eines weiteren Ausführungsbeispiels der Erfindung, dass sich von dem in der Fig. 1 gezeigten Ausführungsbeispiel durch eine weitere Leitung zwischen Rechenmodul und Speichereinheit unterscheidet,
- Fig. 3: eine schematische Darstellung eines dritten Ausführungsbeispiels der Erfindung, die sich von den bisherigen Ausführungsbeispielen durch eine zusätzliche Signalumformungseinrichtung unterscheidet;
- Fig. 4: eine schematische Darstellung eines vierten Ausführungsbeispiels der Erfindung;
- Fig. 5: eine schematische Darstellung eines fünften Ausführungsbeispiels der Erfindung, in dem die Überwachungseinheit durch eine Stromüberwachungseinheit und eine Beschleunigungsmessvorrichtung ergänzt ist;
- Fig. 6: eine schematische Darstellung eines Ausführungsbeispiels des erfindungsgemäßen Verfahrens als ein Ablaufdiagramm;
- Fig. 7: eine schematische Darstellung eines weiteren Ausführungsbeispiels des erfindungsgemäßen Verfahrens als ein weiteres Ablaufdiagramm;
- Fig. 8: eine schematische Darstellung der erfindungsgemäßen Qualitätswerte in einem Koordinatensystem;
- Fig. 9: eine schematische Darstellung eines weiteren Ausführungsbeispiels der erfindungsgemäßen Qualitätswerte, das sich von den vorherigen Ausführungsbeispielen durch diskrete Qualitätswerte unterscheidet,
- Fig. 10: eine schematische Darstellung eines weiteren Ausführungsbeispiels der Erfindung, wobei das Koordinatensystem um Sektoren ergänzt ist;
- Fig. 11: eine Tabelle mit Sektordefinitionen.

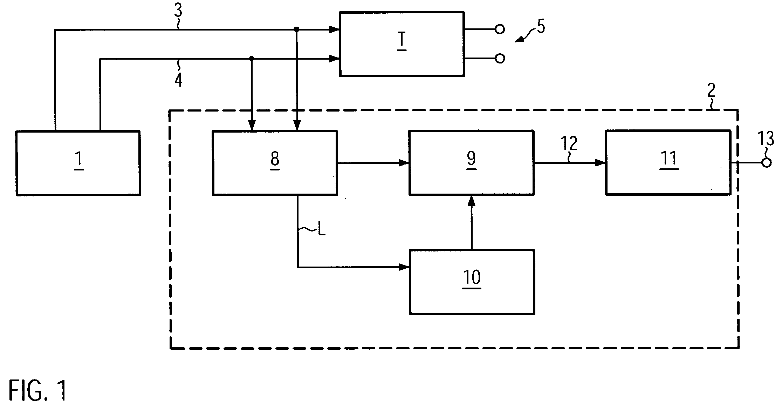

Zunächst werden Aufbau und Funktion eines erfindungsgemäßen Drehgebers mit Bezug auf das Ausführungsbeispiel der Fig. 1 beschrieben. Hier wird schematisch der Aufbau eines erfindungsgemäßen Drehgebers mit einer Sensoreinheit 1 und einem Überwachungsmodul 2 gezeigt.

Die Sensoreinheit 1 gibt ein Messsignalpaar P1 mit zwei sinusförmigen und zueinander phasenverschobenen Messsignalen M1 und M2 über Messsignalleitungen 3, 4 über eine elektronische Signalverarbeitungseinrichtung T an den Signalausgang 5 des Drehgebers aus. Von den beiden Leitungen 3, 4 zweigt je eine weitere Leitung 6, 7 ab, die das Messsignalpaar P1 zu Signaleingängen der Überwachungseinheit 2 leiten.

In der Sensoreinheit können auch separate Signalausgänge für die Ausgabe des Messsignalpaares P1 an den Signaleingang der Überwachungseinheit 2 ausgeformt sein.

In der Überwachungseinheit 2 wird das Messsignalpaar P1 zuerst den Signaleingängen eines Rechenmoduls 8 zugeführt.

Im Rechenmodul 8 wird dem Messsignalpaar P1 ein Kennwert K zugeordnet, der über einen Signalausgang einer Verifikationseinrichtung 9 und über eine Leitung L einer Speichereinheit 10 zugeführt ist. Das Messsignalpaar wird also auf einen Kennwert reduziert. Der eine Kennwert K wird in der Verifikationseinrichtung 9 gegen erwartete Kennwerte bzw. Qualitätswerte E, die in einer Speichereinheit 10, die qualitätswertleitend mit der Verifikationseinrichtung 9 verbunden ist, geprüft.

Ein für das Ergebnis der Prüfung repräsentatives Verifikationssignal V steuert eine ebenfalls in die Überwachungseinheit 2 integrierte Alarmeinheit 11, deren Signaleingang das Verifikationssignal V von der Verifikationseinrichtung 9 über eine Leitung 12 zugeführt ist. An einem Signalausgang 13 der Alarmeinheit 11 liegt ein vom Verifikationssignal V abhängiges Überwachungssignal U an.

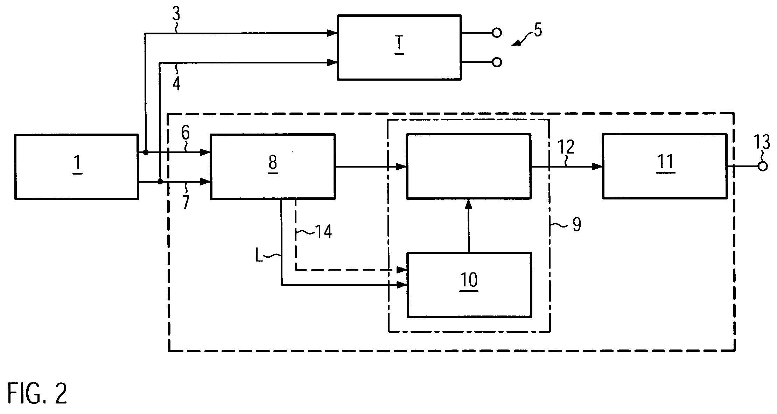

Fig. 2 zeigt ein weiteres Ausführungsbeispiel, wobei für Elemente, die in Funktion und Aufbau den Elementen des Ausführungsbeispiel der Fig. 1 entsprechen, dieselben Bezugszeichen verwendet werden. Der Kürze halber wird lediglich auf die Unterschiede zum Ausführungsbeispiel der Fig. 1 eingegangen.

Das Rechenmodul 8 gibt hier über einen weiteren Signalausgang den Kennwert K auch an die Speichereinheit 10 aus, die über eine Leitung 14 mit dem Rechenmodul 8 verbunden ist. Die Leitung 14 kann aber auch von der Leitung, die das Rechenmodul 8 mit der Verifikationseinrichtung 9 signalleitend verbindet, abzweigen oder durch die Verifikationseinrichtung 9 durchgeschleift und folgend zur Speichereinheit 10 geleitet werden. Die Speichereinheit 10 kann auch Teil der Verifikationseinrichtung 9 sein, wie durch die strichpunktierte Linie dargestellt ist.

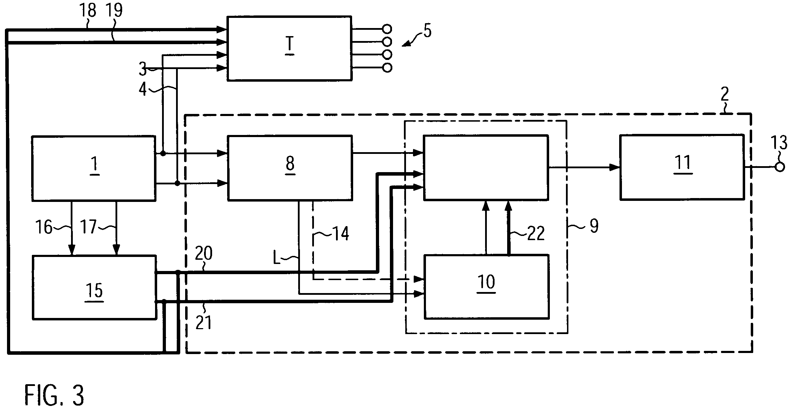

Fig. 3 zeigt ein drittes Ausführungsbeispiel, wobei für Elemente, die in Funktion und Aufbau den Elementen der Ausführungsbeispiele der Figuren 1 oder 2 entsprechen, dieselben Bezugszeichen verwendet werden. Der Kürze halber wird lediglich auf die Unterschiede zu den Ausführungsbeispielen der Figuren 1 und 2 eingegangen.

In Fig. 3 ist zusätzlich eine in den Drehgeber integrierte Signalumformungseinrichtung 15 gezeigt. Der Signalumformungseinrichtung 15 ist hier das Messsignalpaar P1 über separate Messsignalausgänge der Sensoreinheit und Leitungen 16, 17 zugeleitet. Auch können die Leitungen 16, 17 von den Leitungen 3, 4 abzweigen, die das Messsignalpaar P1 vom Signalausgang der Sensoreinheit 1 an den Signalausgang 5 des Drehgebers leiten.

In der Signalumformungseinrichtung 15 wird das sinusförmige Messsignalpaar P1 in ein Paar P2 von Rechtecksignalen R1, R2 gewandelt. Das Rechtecksignalpaar P2 wird über Leitungen 18, 19 weiteren Anschlüssen des Signalausgangs 5 des Drehgebers zugeführt.

Von den Leitungen 18, 19 zweigen hier zwei Leitungen 20, 21 ab, über die je eines der Rechtecksignale R1, R2 des Rechtecksignalpaars P2 der Verifikationseinrichtung zugeführt ist.

Auch hier kann wieder ein separates Paar Signalausgänge der Signalumformungseinrichtung 15 mit dem Signalausgang 5 des Drehgebers verbunden sein, wobei dann ein weiteres Paar Signalausgänge, dass auch das Rechtecksignal P2 ausgegeben werden kann, über die Leitungen 20, 21, direkt mit der Verifikationseinrichtung 9 verbunden ist.

Um das Rechtecksignalpaar P2 in der Verifikationseinrichtung 9 prüfen zu können, ist dieser ein zweiter Qualitätswert E2 von der Speichereinheit 10 über die Leitung 22 zugeführt.

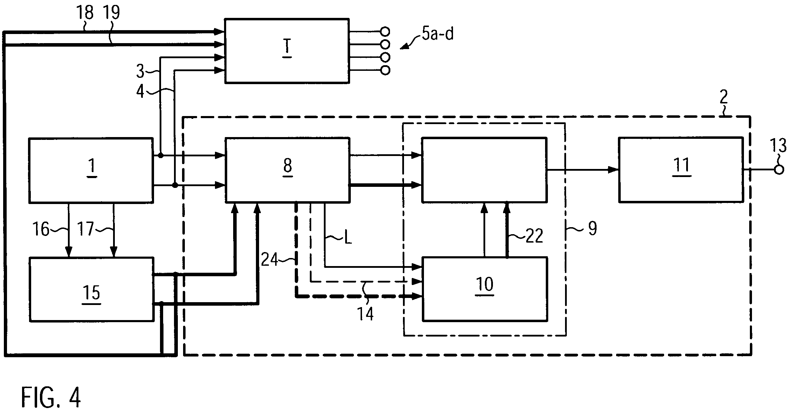

Fig. 4 zeigt ein viertes Ausführungsbeispiel, wobei für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Die Leitungen 20, 21 verbinden hier nicht die Signalumformungseinrichtung 15 mit der Verifikationseinrichtung 9, sondern mit dem Rechenmodul 8. Aus dem dem Rechenmodul 8 zugeführten Rechtecksignalpaar P2 wird im Rechenmodul 8 ein zweiter Kennwert K2 ermittelt, der über eine gesonderte Leitung 23 der Verifikationseinrichtung 9 und über eine weitere Leitung 24 der Speichereinheit 10 zugeführt wird. Natürlich können an einem Signalausgang des Rechenmoduls 8 sowohl die Verifikationseinrichtung 9 als auch die Speichereinheit 10 angeschlossen sein.

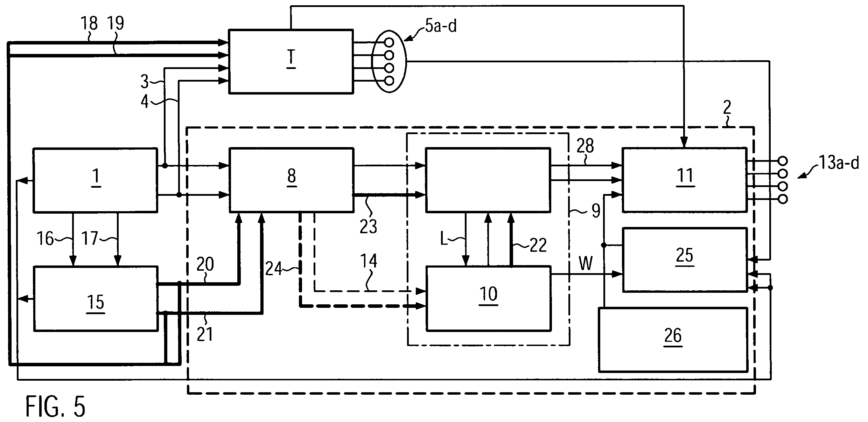

Ein fünftes Ausführungsbeispiel zeigt die Fig. 5, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Der Überwachungseinheit 2 sind hier zwei weitere Funktionseinheiten, eine Signalvergleichseinheit 25 und eine Beschleunigungsmessvorrichtung 26, hinzugefügt. Beide sind über eine gemeinsame Leitung mit der Alarmeinheit 11 verbunden. Natürlich können die hier generierten Verifikationssignale auch über getrennte Leitungen je einem Signaleingang der Alarmeinheit zugeleitet sein.

Der Alarmeinheit 11 werden hier vier Verifikationssignale zugeführt, die für die Funktion von vier Funktionseinheiten repräsentativ sind, und für jedes dieser Signale wird hier ein Überwachungssignal U an einem der Signalausgänge 13a-d der Alarmeinheit 11 ausgegeben.

Die Verifikationseinrichtung 9 gibt ein für die Funktion der Sensoreinheit 1 repräsentatives Verifikationssignal V1 über die Leitung 12 und ein für die Signalumformungseinrichtung 15 repräsentatives Verifikationssignal V2 über die Leitung 28 an die Alarmeinheit 11 weiter.

An jedem der Signalausgänge 13a-d liegen Übenrvachungssignale U a-d an, die beispielsweise LEDs zuführbar sind. Für jede der überwachten Funktionseinheiten 1, 15, 25, 26 können zum Beispiel drei LEDs ansteuerbar sein, so dass die Funktionstüchtigkeit der Funktionseinheiten 1, 15, 25, 26 des Drehgebers beispielsweise über eine grüne, eine gelbe und eine rote LED anzeigbar ist.

Auch können die Überwachungssignale U a-d an eine Datenverarbeitungseinrichtung leitbar sein, in der der Zustand des Drehgebers in einer Datenbank speicherbar und/oder auf einem Bildschirm anzeigbar ist.

Insbesondere das Verifikationssignal der Signalvergleichseinheit 25 kann auch zur Erkennung von Fehlerquellen dienen, die außerhalb des Drehgebers liegen. So kann beispielsweise eine ansteigende Temperatur im Bereich der Signalverarbeitungseinrichtung T, die bis zu einem Ausgangstreiber je Signalausgang und wenigstens einen Temperatursensor umfassen kann, darauf hindeuten, dass zum Beispiel durch einen Kurzschluss außerhalb des Drehgebers ein unzulässig hoher Strom durch einen der Signalausgänge 5 fließt.

Zur Erkennung dieses Fehlers sind in der Signalvergleichseinheit 25, die mit den Signalausgängen 5a-d, der Sensoreinheit 1 und der Signalumformungseinrichtung 15 signalleitend verbunden gezeigt ist, die Amplitudenwerte AM1, AM2, AR1, AR2 der Signalpaare P1, P2 am Signalausgang 5a-d mit den Amplitudenwerten AM1, AM2, AR1, AR2 der Signalpaare P1, P2, die an den Signalausgängen der Sensoreinheit 1 und/oder der Signalumformungseinrichtung 15 anliegen, vergleichbar. Um diesen Vergleich durchführen zu können, sind der Signalvergleichseinheit 25 vom Rechenmodul 8 Kennwerte K, K2 und/oder Informationen zur Auswahl des zu prüfenden Rechtecksignals zufürhbar. Zusätzlich sind Qualitätswerte E, E2 der Signalvergleichseinheit 25 vom Speichermodul 8 zuführbar. Ein für das Ergebnis des Vergleichs repräsentatives Verifikationssignal ist an die Alarmeinheit 11 ausgebbar.

Die Beschleunigungsmessvorrichtung 26, die beispielsweise einen ein-, zwei- oder dreidimensionalen Absolut-Beschleunigungssensor umfasst, kann Erschütterungen oder Vibration in ein weiteres Verifikationssignal V wandeln, wodurch beispielsweise Zusammenstöße von mit dem Drehgeber verbundenen Bauteilen mit weiteren Bauteilen oder andere mechanische Schwingungen erzeugende Fehler, wie beispielsweise eine fehlerhafte Montage des Drehgebers oder defekte Kugellager, erkannt werden.

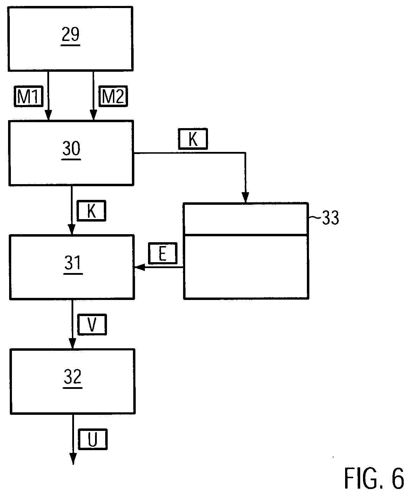

Die Fig. 6 zeigt ein sechstes Ausführungsbeispiel, wobei auch hier für Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Das hier gezeigte Ablaufdiagramm veranschaulicht das Verfahren zum Überprüfen der Funktionsfähigkeit des Drehgebers anhand des Messsignalpaares P1. Die von der Winkellage ϕ abhängigen Amplitudenwerte der Messsignale M1, M2 haben hier beispielsweise die Form AM1 = U cos(kϕ) und AM2 = U sin(kϕ), wobei k die Anzahl der Inkremente ist. Die aktuellen Amplitudenwerte AM1, AM2 des Messsignalpaars P1, die im Ablaufschritt 29 erzeugbar sind, werden hier bei dem Schritt zur Kennwertermittlung 30 über eine arithmetische Funktion zu dem einen Kennwert K verknüpfbar. Bei den oben genannten Winkelfunktionsformen der Messsignale M1, M2 kann die arithmetische Funktion beispielsweise umfassen, dass die Amplitudenwerte AM1, AM2 quadriert addiert werden.

Bei einem perfekt gebauten und arbeitenden Drehgeber ist der ideale Kennwert Ki = (AM1)² + (AM2)² = U² cos² (kϕ) + U² sin²(kϕ) = U² in jedem Moment des Betriebes des Drehgebers konstant.

Durch Funktionsabweichungen des Drehgebers bei der Erzeugung des Messsignalpaars P1 im Schritt 29, was beispielsweise durch unterschiedliche Leuchtdichten der Lichtquellen oder verschmutzte Sensorik bei optischen Drehgebern der Fall sein kann, kann der ermittelte Kennwert K auch vom idealen, konstanten Kennwert Ki abweichen.

Ist das Messsignalpaar P1, dessen Abweichung vom Idealwert die Abweichung des Kennwertes K vom idealen Kennwert Ki hervorruft, noch gut genug, um eine ordnungsgemäße Funktion des Drehgebers gewährleisten zu können, ist bei der Verifizierung 31 des Kennwertes K ein Verifikationssignal V erzeugbar, das die Funktionszustände des Drehgebers repräsentiert. In Abhängigkeit des Verifikationssignals V ist im Verfahrensschritt 32 das Überwachungssignal U generierbar. Auch eine Verwendung des Verifikationssignals V als Überwachungssignal U ist möglich.

Weicht der Kennwert K zu weit vom idealen Kennwert Ki ab, so dass beispielsweise in Zukunft die Funktion des Drehgebers nicht gewährleistet werden kann, ist z. B. anhand des dementsprechenden Verifikationssignals V ein Überwachungssignal U als ein Warn- oder Wartungssignal ausgebbar.

Weicht der Kennwert K zu weit vom idealen Kennwert Ki ab, was beispielsweise durch ein Messsignalpaar P1 mit wenigstens einer zu geringen Amplitude AM1, AM2 hervorgerufen wird, ist ein Überwachungssignal U als ein Fehlersignal ausgebbar, anhand dessen beispielsweise eine Maschine, in der der Drehgeber eingebaut ist, in ihrer Funktion beeinträchtigt ist.

Anstatt der Ermittlung der Differenz zwischen dem ermittelten Kennwert K und dem idealen Kennwert Ki kann der Kennwert K auch gegen Kennwertklassen Ki, K+, K- geprüft werden. Dabei definieren die Kennwertklassen Ki, K+, K- Bereiche, die beispielsweise Messsignale M1, M2 mit "guter", mit "noch guter" oder mit "nicht guter" Qualität repräsentieren.

Diese Kennwertklassen sind in den Ausführungsbeispielen der bisherigen Figuren, z. B. in der Speichereinheit 10, als Qualitätswerte E, E2 speicherbar, durch die auch Qualitätswertintervalle begrenzbar sind.

Um für jeden Drehgeber individuelle Qualitätswerte E, E2 zu erstellen, sind die im Schritt 30 ermittelten Kennwerte K einem Kennwertsammel- und verarbeitungsschritt 33, der im Rechenmodul 8 oder auch in der Speichereinheit 10 ablaufen kann, zuführbar.

Kennwerte K, die in einem bestimmten Zeitraum, wie etwa bei der ersten Betriebnahme oder einer Wartung, gesammelt werden, sind in diesem Schritt 33 statistisch bewertbar. Die Klassifizierung der Kennwertklassen Ki, K+, K- bzw. der Qualitätswerte E ist hier anhand von vorgegebenen Auftrittswahrscheinlichkeiten bestimmbar.

Um beispielsweise auszuschließen, dass im Schritt 33 ermittelte gute Qualitätswerte E ein Messsignalpaar P1 mit beispielsweise wenigstens einem unzureichenden Amplitudenwerten AM1, AM2 repräsentieren, sind zur Kontrolle der ermittelten Qualitätswerte E diese mit absoluten beispielsweise vorab in der Speichereinheit 10 gespeicherten Grenzwerten vergleichbar.

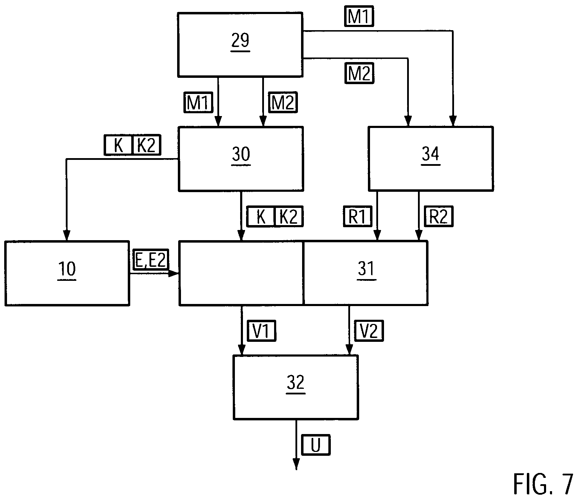

Im siebten Ausführungsbeispiel, das die Fig. 7 zeigt, sind für Elemente, die in Funktion und Aufbau der Elemente der Ausführungsbeispiele der vorherigen Figuren entsprechen, ebenfalls dieselben Bezugszeichen verwendet. Der Kürze halber wird auf die Unterschiede zu den Ausführungsbeispielen der schon beschriebenen Figuren eingegangen.

Hier ist das Messsignalpaar P1 in einem Signalumformungsschritt 34 in ein Paar von Rechtecksignalen P2 wandelbar. Amplitudenwerte AR1, AR2 der Rechtecksignale R1, R2 sind hier als Kennwerte direkt dem Verifizierungsschritt 31 zuleitbar.

Im Verifizierungsschritt 31 ist wenigstens einer der Amplitudenwert AR1, AR2 eines Rechtecksignalpaars Paares P2 mit wenigstens einem Qualitätswert E2 vergleichbar. Die Auswahl eines der Rechtecksignale R1, R2 ist anhand der Amplitudenwerte AM1, AM2 des Messsignalpaars P1 durchführbar.

Drehwerte, bei denen das Messsignalpaar P1 Messsignale M1, M2 mit Amplitudenwerten AM1, AM2 von gleichem Betrag aufweist, begrenzen Sektoren S1 bis S4, in denen je eines der Rechtecksignale R1, R2 zu prüfen ist. Insbesondere kann geprüft werden, ob der Amplitudenwert AR1, AR2 größer oder kleiner ist als ein oberer bzw. unterer Qualitätswert E2.

Sind die Rechtecksignale R1, R2 gegenüber den Messsignalen M1, M2 phasenverschoben, sind die Sektorengrenzen entsprechend zu verschieben.

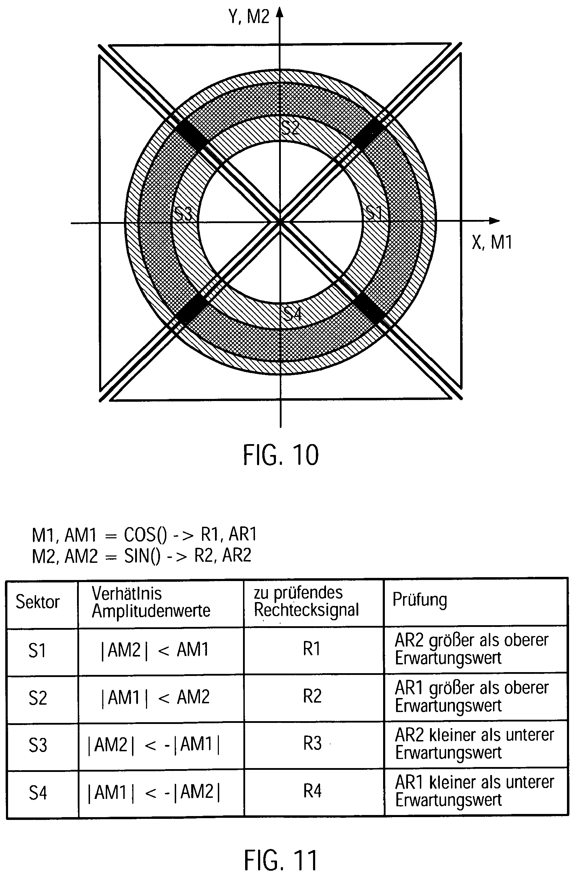

Eine Tabelle, die die Auswahl des zu prüfenden Rechtecksignals verdeutlicht, ist in Fig. 11 gezeigt.

Im Verifizierungsschritt 31 wird hier ein zweites Verifikationssignal V2 erzeugt, das auch für das Rechtecksignalpaar P2 für "gute", "noch gute" oder "nicht gute" Amplitudenwerte AR1, AR2 oder andere Funktionsmerkmale repräsentativ ist und anhand dessen das Überwachungssignal U generierbar ist.

Die Kennwerte K, K2 werden hier dem Verifikationsschritt 31 und der Speichereinheit 10 zugeführt.

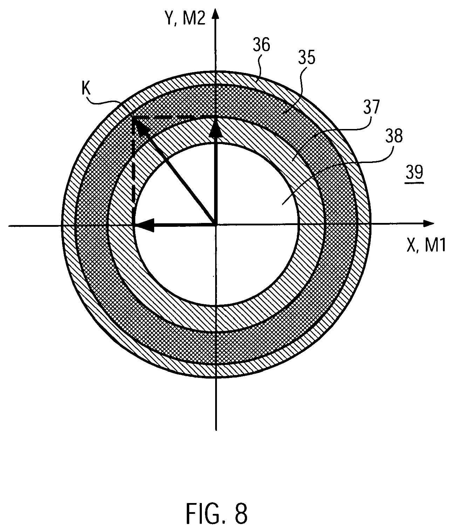

Ein achtes Ausführungsbeispiel zeigt die Fig. 8, wobei auch hierfür Elemente, die in Funktion und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Die Fig. 8 zeigt eine weitere Methode, um aus den Amplitudenwerten AM1, AM2 den einen Kennwert K zu ermitteln. Dabei ist der Kennwert K einfacher zu ermitteln, da auf die Quadrierung der Amplitudenwerte AM1, AM2 verzichtet werden kann.

In der Fig. 8 ist ein Koordinatensystem mit rechtwinklig zueinander angeordneten Achsen X und Y, die beide den gleichen Maßstab aufweisen, gezeigt. Werden auf den Achsen X und Y je einer der Amplitudenwerte als Vektor aufgetragen; hier beispielsweise der Amplitudenwert AM1 auf der X-Achse und der Amplitudenwert AM2 auf der Y-Achse, so zeigt der Summenvektor auf den Kennwert K. Repräsentiert der Kennwert K gute Amplitudenwerte AM1, AM2, liegt er in einem Bereich guter Qualitätswerte, die im Qualitätswertring 35 angeordnet sind. Noch gute Qualitätswerte E sind durch die Qualitätswertringe 36 und 37 repräsentiert, nicht gute Qualitätswerte E liegen außerhalb in den Bereichen 38 bzw. 39.

Die Anzahl der gespeicherten Kennwerte kann von der Auflösung der beteiligten A/D-Wandler abhängen, beispielsweise also ein Feld von 1024 x 1024 umfassen. Alternativ können auch Teile des A/D -Wandler maskiert sein, um den Speicherbedarf zu verringern.

Zur individuellen Eichung der Qualitätswerte E, E2 auf einen Drehgeber kann im Drehgeber eine Anzahl Kennwerte K aufgenommen und ausgewertet werden. Werden beispielsweise 5000 Kennwerte K ausgewertet, kann dies als eine Stichprobe aus einer Vielzahl von möglichen Kennwerten K angesehen werden. Weist das Histogramm der 5000 Kennwerte K eine normale Verteilung mit einer Standardabweichung auf, kann man z. B. einen oberen und einen unteren Qualitätswert E, E2 bestimmen, die zusammen beispielsweise den "noch guten" Bereich für die Kennwerte K begrenzen. Dabei können die Qualitätswerte E, E2 zueinander einen Abstand von der sechsfachen Standardabweichung der Kennwerte K aufweisen. Liegt ein später ermittelter Kennwert K außerhalb dieses Bereichs, kann der Drehgeber ein Überwachungssignal U ausgeben, das dieses Ereignis anzeigt.

Sollte das Histogramm der 5000 Kennwerte K anders verteilt sein, sind die Qualitätswerte E entsprechend anders zu ermitteln. Auch bei der Wartung des Drehgebers kann eine solche Stichprobe ermittelt und ausgewertet werden. Eine Änderung der Phase zwischen den Messsignalen M1, M2 des Messsignalpaars P1 kann ebenfalls erkannt werden, auch wenn der Drehgeber sich im Stillstand befindet.

Bei diesem Selbstlernverfahren können individuell Qualitätswerte E, E2 von funktionierenden, aber nicht perfekt arbeitenden Drehgebem, deren Messsignalpaar P1 beispielsweise Messsignale M1, M2 mit unterschiedlichen maximalen Amplitudenwerte AM1, AM2 aufweist, ermittelt werden.

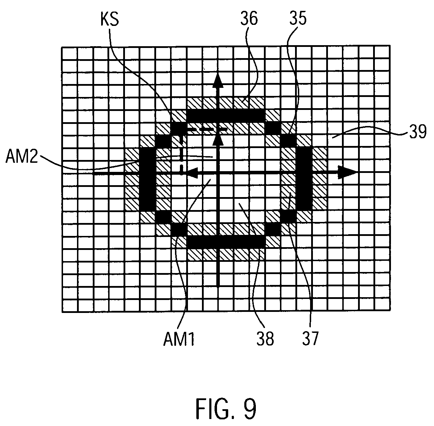

Fig. 9 zeigt ein neuntes Ausführungsbeispiel, wobei für Elemente, die in Funktionen und Aufbau den Elementen der Ausführungsbeispiele der vorherigen Figuren entsprechen, dieselben Bezugszeichen verwendet werden. Der Kürze halber wird lediglich auf die Unterschiede zu den Ausführungsbeispielen der schon beschriebenen Figuren eingegangen.

Die Qualitätswertringe 35 bis 39 können auch in einem zumindest zweidimensionalen Kennfeld, also beispielsweise einem digitalen Speicher, abgebildet sein. Hier entsprechen die digitalisierten Amplitudenwerte AM1, AM2 Speicheradressen, die zur Berechnung einer Kennwertspeicheradresse Ks miteinander kombinierbar sind. Die Kennwertspeicheradresse Ks enthält vorzugsweise mehr als zwei Zustände bzw. mehr als ein Bit, um die Einstufung der unter der Kennwertspeicheradresse Ks gespeicherten Qualitätswerte in beispielsweise "gut", "noch gut", "nicht gut" usw. vornehmen zu können, wobei jedem Status bis zu einem Qualitätswert E oder mehr zugewiesen wird. Reicht eine Einordnung in "gut" und "nicht gut" aus, ist dies auch in zwei Zuständen, beispielsweise als 0 oder 1, darstellbar.

Die Kombination der digitalen Amplitudenwerte AM1, AM2 kann auch in anderer Form erfolgen, so dass die Qualitätswerte E im Speicher nicht als Qualitätswertringe 35 bis 39 abgebildet sind. So können die zumindest noch guten Qualitätswerte E2 zusammen mit den guten Qualitätswerten E den gesamten Speicher einnehmen und ermittelte Kennwertspeicheradressen Ks, die anhand nicht guter Amplitudenwerte AM1, AM2 ermittelt werden, außerhalb des gültigen Adressraumes liegen.

Das ausgewählte Rechtecksignal R1, R2 kann auf vergleichbare Weise, analog nach Fig. 8 oder digital nach Fig. 9 prüfbar sein, wobei Amplitudenwerte AR1, AR2 oder Kennwerte E2 für die Prüfung heranziehbar sind.

Die Verifikationseinrichtung 10 kann insbesondere anhand der im Rechenmodul 8 bestimmten Kennwertspeicheradresse Ks den Inhalt dieser Adresse in der Speichereinheit 10 auslesen.

Ein zehntes Ausführungsbeispiel zeigt die Fig. 10, wobei auch hier für Elemente, die in Funktion und Aufbau den Elementen der Ausführungsbeispiele der vorherigen Figuren entsprechen, dieselben Bezugszeichen verwendet werden. Der Kürze halber wird auf die Unterschiede zu den Ausführungsbeispielen der schon beschriebenen Figuren eingegangen.

Hier ist wieder das Koordinatensystem der Fig. 8 gezeigt. Zusätzlich sind die Sektoren S1 bis S4, die durch Sektorgrenzen 40, 41 begrenzt sind, gezeigt, in denen der Amplitudenwert AR1, AR2 je eines der Rechtecksignale R1, R2 zu prüfen ist. Weisen die Messsignale M1, M2 des Messsignalpaars P1 einen Phasenversatz von 90° zueinander auf, spannen die Achsen X, Y und die Sektorgrenzen 40, 41 Winkel von 45° auf, wobei hier das kosinusförmige Messsignal M1 auf der X- und das sinusförmige Messsignal M2 auf der Y-Achse aufgetragen sind.

Fig. 11 zeigt ein elftes Ausführungsbeispiel, wobei für Elemente, die in Funktion und Aufbau den Elementen der Ausführungsbeispiele der vorherigen Figuren entsprechen, dieselben Bezugszeichen verwendet werden. Der Kürze halber wird auf die Unterscheide zu den Ausführungsbeispielen der schon beschriebenen Figuren eingegangen.

Hier ist eine Tabelle gezeigt, die die Bestimmungen der Sektoren S1 bis S4 anhand des Verhältnisses der Amplitudenwerte AM1, AM2 des Messsignalpaars P1 zueinander zeigt. Die Sektorgrenzen 40 und 41 werden bestimmt durch Amplitudenwerte AM1, AM2 des Messsignalpaares P1, die absolut oder betragsmäßig gleich sind. Um die Sektoren S1 bis S4 zuweisen zu können, wird hier definiert, dass das Messsignal M1 in das Rechtecksignal R1 gewandelt wird, wobei Messsignal M1 und Rechtecksignal R1 eine gleiche Frequenz aufweisen, und zueinander nicht phasenverschoben sind. Das Messsignal M2 wird in das Rechtecksignal R2 überführt. Auch das Rechtecksignal R2 ist zum Messsignal M2 nicht in der Phase verschoben und beide Signale weisen die gleiche Frequenz auf.

Im Sektor 1 ist der Betrag des Amplitudenwerts AM2 des Messsignals M2 kleiner als der Amplitudenwert AM1 des Messsignals 1. Im so definierten Sektor 1 wird geprüft, ob der Amplitudenwert AR1 des Rechtecksignals R1 größer ist als ein oberer Qualitätswert.

In Sektor 2 ist der Betrag des Amplitudenwerts AM1 kleiner als der Amplitudenwert AM2. Hier wird geprüft, ob der Amplitudenwert AR2 größer ist als ein oberer Qualitätswert.

Im Sektor S3 ist der negative Amplitudenwert AM1 größer als der Betrag des Amplitudenwerts AM2.

Im Sektor S4 ist der negative Betrag des Amplitudenwertes AM2 größer als der Amplitudenwert AM1. Hier wird geprüft, ob der Amplitudenwert AR2 kleiner ist als ein unterer Qualitätswert.

## Patentansprüche

1. Verfahren zum Überprüfen der Funktionsfähigkeit eines Drehgebers während dessen Betrieb, bei dem mindestens ein Paar (P1) von zueinander phasenverschobenen, für einen Drehwert, wie etwa eine Winkellage einer Achse, repräsentativen Messsignalen (M1, M2) mit im Drehgeber gespeicherten Referenzinformationen verglichen wird, wobei Amplitudenwerte (AM1, AM2) des Messsignalpaars (P1) im Drehgeber zu einem Kennwert (K) zusammengefasst werden und dem Kennwert (K) wenigstens eine Referenzinformation zugeordnet wird, die im Drehgeber als ein Qualitätswert (E) gespeichert ist und die zulässige Amplitudenwertkombinationen repräsentiert und in Abhängigkeit vom dem Qualitätswert (E) ein Überwachungssignal (U) ausgegeben wird, **dadurch gekennzeichnet, dass** die Amplitudenwerte (AM1, AM2) digitalisiert werden und durch Kombination der digitalisierten Amplitudenwerte der Kennwert (K) berechnet wird, wobei der Kennwert (K) einer Kennwertspeicheradresse (Ks) entspricht, wobei die Kennwertspeicheradresse (Ks) zur Adressierung eines zumindest zweidimensionalen Kennfeldes einer Speichereinheit (10) verwendet wird, wobei in der Speichereinheit die Qualitätswerte (E) abgelegt sind.

2. Verfahren nach Anspruch 1, **dadurch gekennzeichnet, dass** die Berechnung der Kennwertspeicheradresse (Ks) in einem Rechenmodul (8) erfolgt.

3. Verfahren nach Anspruch 2, **dadurch gekennzeichnet, dass** der Qualitätswert (E) vorzugsweise von einer Verifikationseinrichtung (9) aus einem durch die Kennwertspeicheradresse (Ks) bestimmten Speicher der Speichereinheit (10) ausgelesen wird.

4. Verfahren nach einem vorhergehenden Ansprüche, **dadurch gekennzeichnet, dass** die Amplitudenwerte des Messsignalpaares (P1) mittels einer arithmetischen Funktion kombiniert werden.

5. Verfahren nach einem vorhergehenden Ansprüche, **dadurch gekennzeichnet, dass** die Amplitudenwerte des Messsignalpaares (P1) quadriert und die Ergebnisse addiert werden.

6. Verfahren nach einem der vorhergehenden Ansprüche, **dadurch gekennzeichnet, dass** der Qualitätswert (E) für einen perfekten Drehgeber für alle Drehwinkelwerte konstant ist.

7. Verfahren nach einem der vorhergehenden Ansprüche, **dadurch gekennzeichnet, dass** im Betrieb des Drehgebers eine vorbestimmte Mindestmenge von Drehwinkelwerten in Kennwerten (K) gewandelt und diese gesammelt werden.

8. Verfahren nach Anspruch 7, **dadurch gekennzeichnet, dass** während des Betriebs Qualitätswerte (E) in Abhängigkeit von der Aufenthaltswahrscheinlichkeit der Kennwerte (K) festgelegt werden.

9. Verfahren nach Anspruch 8, **dadurch gekennzeichnet, dass** die festgelegten Qualitätswerte (E) mit vorgegebenen Grenzen verglichen werden.

10. Verfahren nach einem der vorhergehenden Ansprüche, **dadurch gekennzeichnet, dass** zur Feststellung von Kurzschlüssen die Temperatur der Signalverarbeitungseinrichtung (7) überwacht wird.

11. Drehgeber umfassend
eine Sensoreinheit (1), durch welche wenigstens ein Paar (P1) von sinusförmigen, relativ zueinander phasenverschobenen Messsignalen (M1, M2) erzeugbar ist, und eine Überwachungseinheit (2), die mit der Sensoreinheit (1) messsignalübertragend verbunden ist und durch die im Betrieb zumindest ein für die Funktionsfähigkeit des Drehgebers repräsentatives Überwachungssignal (U) ausgebbar ist, wobei in der Überwachungseinheit (2)
ein Rechenmodul (8), durch das aus dem Messsignalpaar (P1) ein Kennwert (K) erzeugbar ist,
eine Speichereinheit (10), in der wenigstens ein Qualitätswert (E) speicherbar ist,
eine Verifizierungseinrichtung (9), durch die dem Kennwert (K) ein Qualitätswert (E) zuordenbar ist, und
eine Alarmeinheit (11), die in Abhängigkeit des Ergebnisses der Zuordnung durch die Verifizierungseinrichtung (9) steuerbar und in der das Überwachungssignal (U) generierbar ist, vorgesehen sind,
**dadurch gekennzeichnet, dass**
Mittel (15) zur Digitalisierung der Amplitudenwerte (AM1, AM2) vorgesehen sind und der Kennwert (K) durch Kombination der digitalisierten Amplitudenwerte in dem Rechenmodul (8) berechenbar ist, wobei der Kennwert (K) einer Kennwertspeicheradresse (Ks) entspricht, die zur Adressierung eines zumindest zweidimensionalen Kennfeldes in der Speichereinheit (10) verwendbar ist, wobei in der Speichereinheit (10) die Qualitätswerte (E) abgelegt sind.

12. Drehgeber nach Anspruch 11, **dadurch gekennzeichnet, dass** die Amplitudenwerte des Messsignalpaares (P1) quadriert und die Ergebnisse addiert werden.

13. Drehgeber nach einem der Ansprüche 11 oder 12, **dadurch gekennzeichnet, dass** der Qualitätswert (E) vorzugsweise von der Verifizierungseinrichtung (9) aus einem durch die Kennwertspeicheradresse (Ks) bestimmten Speicher der Speichereinheit (10) ausgelesen wird.

14. Drehgeber nach Anspruch 13, **dadurch gekennzeichnet, dass** an einem Signalausgang der Verifizierungseinrichtung (9) ein für das Ergebnis der Prüfung des Kennwertes (K) gegen den Qualitätswert (E, E2) repräsentatives Verifikationssignal (V) anliegt, das der Alarmeinheit (11) zuführbar ist.

15. Drehgeber nach einem der Ansprüche 13 oder 14, **dadurch gekennzeichnet, dass** ein vom Verifikationssignal (V) abhängiges Überwachungssignal (U) an den Signalausgang der Alarmeinheit (11) anlegbar ist.

## Claims

1. Method for checking the operability of a rotary encoder when said rotary encoder is in operation, whereby at least one pair (P1) of measuring signals (M1, M2), which are shifted in phase relative to one another and which are representative of an amount of rotation, such as an angular position of a shaft, are compared with reference information stored in the rotary encoder, whereby in the rotary encoder the amplitude values (AM1, AM2) of the measuring signal pair (P1) are combined in a characteristic value (K), and the characteristic value (K) has associated therewith at least one reference information, which is stored in the rotary encoder as a quality value (E) and which is representative of the admissible amplitude value combinations, and a monitoring signal (U) is outputted in dependence upon the quality value (E), **characterized in that** the amplitude values (AM1, AM2) are digitized and the characteristic value (K) is calculated by combination of the two digitized amplitude values, whereby the characteristic value (K) corresponds to a characteristic value memory address (Ks) used for addressing an at least two-dimensional characteristic diagram of a memory unit (10) in which quality values (E) are stored.

2. Method in accordance with claim 1, **characterized in that** the calculation of the characteristic value memory address (Ks) takes place in a computing module (8).

3. Method in accordance with Claim 2, **characterized in that** the quality value (E) is read, preferably by a verification device (9), from memory determined by the characteristic value memory address (Ks) of the memory unit (10).

4. Method in accordance with one of the above-mentioned Claims, **characterized in that** the amplitude values of the measuring signal pair (P1) are combined by an arithmetic function.

5. Method in accordance with one of the above-mentioned Claims, **characterized in that** the amplitude values of the measuring signal pair (P1) are squared and the results added.

6. Method in accordance with one of the above-mentioned Claims, **characterized in that** the quality value (E) for a perfect rotary encoder is constant for all rotary angle values.

7. Method in accordance with one of the above-mentioned Claims, **characterized in that**, when the rotary encoder is in operation, a predetermined minimum amount of rotary angle values is converted into characteristic values (K) and the latter are collected.

8. Method in accordance with Claim 7, **characterized in that**, during operation, quality values (E) are determined in dependence upon the residence likelihood of the characteristic values (K).

9. Method in accordance with Claim 8, **characterized in that** the quality values (E) determined are compared with predetermined limits.

10. Method in accordance with one of the above-mentioned Claims, **characterized in that**, for detecting short circuits, the temperature of the signal processing unit (7) is monitored.

11. Rotary encoder comprising
a sensor unit (1) by which at least one pair (P1) of sinusoidal measuring signals (M1, M2), which are shifted in phase relative to one another, can be generated, and
a monitoring unit (2) which is connected to the sensor unit (1) in a measuring signal-transmitting manner and by which at least one monitoring signal (U) representative of the operability of the rotary encoder can be outputted during operation, whereby in the monitoring unit (2) are provided
a computing module (8) by which a characteristic value (K) can be generated from the measuring signal pair (P1),
a memory unit (10) in which at least one quality value (E) can be stored,
a verification device (9) by which a quality value (E) can be associated with the characteristic value (K), and
an alarm unit (11) which is controllable in dependence upon the result of the association executed by the verification device (9) and in which the monitoring signal (U) can be generated,
**characterized in that** means (15) for digitization of the amplitude values (AM1, AM2) are provided and the characteristic value (K) can be calculated in the calculating unit (8) by combination of the two digitized amplitude values, whereby the characteristic value (K) corresponds to a characteristic value memory address (Ks) used for addressing an at least two-dimensional characteristic diagram of a memory unit (10) in which quality values (E) are stored.

12. Rotary encoder in accordance with Claim 11, **characterized in that** the amplitude values of the measuring signal pair (P1) are squared and the results added.

13. Rotary encoder in accordance with one of the Claims 11 or 12, **characterized in that** the quality value (E) is read, preferably by a verification device (9), from memory determined by the characteristic value memory address (Ks) of the memory unit (10).

14. Rotary encoder in accordance with Claim 13, **characterized in that** a signal output of the verification device (9) has applied thereto a verification signal (V) which is representative of the result of the examination of the characteristic value (K) in comparison with the quality value (E, E2), which is adapted to be supplied to the alarm unit (11).

15. Rotary encoder in accordance with one of the Claims 13 or 14, **characterized in that** a monitoring signal (U), which depends on the verification signal (V), is adapted to be applied to the signal output of the alarm unit (11).

## Revendications

1. Procédé permettant de vérifier le bon fonctionnement d'un codeur pendant son exploitation, au cours duquel au moins une paire (P1) de signaux de mesure (M1, M2) aux phases décalées, représentatifs pour une valeur de rotation, comme par exemple une orientation angulaire d'un axe est comparée avec des informations de référence enregistrées dans le codeur, des valeurs d'amplitude (AM1, AM2) de la paire de signaux de mesure (P1) étant regroupées dans le codeur en une valeur caractéristique (K) et au moins une information de référence étant affectée à la valeur caractéristique (K), l'information de référence étant enregistrée dans le codeur en tant que valeur de qualité (E) et représentant les combinaisons de valeurs d'amplitude admises et un signal de surveillance (U) étant émis en fonction de la valeur de qualité (E), **caractérisé en ce que** les valeurs d'amplitude (AM1, AM2) sont numérisées et la valeur caractéristique (K) est calculée par la combinaison des valeurs d'amplitude numérisées, la valeur caractéristique (K) correspondant à une adresse mémoire de valeur caractéristique (Ks), l'adresse mémoire de valeur caractéristique (Ks) étant utilisée pour l'adressage d'un champ caractéristique au moins bidimensionnel d'une unité de mémoire (10), les valeurs de qualité (E) étant enregistrées dans l'unité de mémoire.

2. Procédé selon la revendication 1, **caractérisé en ce que** le calcul de l'adresse mémoire de valeur caractéristique (Ks) a lieu dans un module de calcul (8).

3. Procédé selon la revendication 2, **caractérisé en ce que** la valeur de qualité (E) est lue de préférence par un dispositif de vérification (9) d'une mémoire déterminée par l'adresse mémoire de valeur caractéristique (Ks) de l'unité de mémoire (10).

4. Procédé selon l'une des revendications précédentes, **caractérisé en ce que** les valeurs d'amplitude de la paire de signaux de mesure (P1) sont combinées à l'aide d'une fonction arithmétique.

5. Procédé selon l'une des revendications précédentes, **caractérisé en ce que** les valeurs d'amplitude de la paire de signaux de mesure (P1) sont élevées au carré et les résultats additionnés.

6. Procédé selon l'une des revendications précédentes, **caractérisé en ce que** la valeur de qualité (E) pour un codeur parfait est constante pour toutes les valeurs d'angle de rotation.

7. Procédé selon l'une des revendications précédentes, **caractérisé en ce que**, lors du fonctionnement du codeur, une quantité minimale prédéterminée de valeurs d'angle de rotation est transformée en valeurs caractéristiques (K) et celles-ci sont regroupées.

8. Procédé selon la revendication 7, **caractérisé en ce que**, pendant le fonctionnement, des valeurs de qualité (E) sont définies en fonction de la probabilité d'arrêt des valeurs caractéristiques (K).

9. Procédé selon la revendication 8, **caractérisé en ce que** les valeurs de qualité (E) définies sont comparées avec des limites prédéfinies.

10. Procédé selon l'une des revendications précédentes, **caractérisé en ce que** pour déceler des courts-circuits, la température du dispositif de traitement des signaux (7) est surveillée.

11. Codeur comprenant
une unité de détecteur (1), par le biais de laquelle au moins une paire (P1) de signaux de mesure (M1, M2) de forme sinusoïdale, aux phases décalées les unes par rapport aux autres, peut être produite, et
une unité de surveillance (2), qui est raccordée à l'unité de détecteur (1) en transférant les signaux de mesure et par le biais de laquelle, lors du fonctionnement, au moins un signal de surveillance (U) représentatif pour le bon fonctionnement du codeur peut être émis, l'unité de surveillance (2) comprenant
un module de calcul (8), par le biais duquel une valeur caractéristique (K) peut être produite à partir de la paire de signaux de mesure (P1),
une unité de mémoire (10), dans laquelle au moins une valeur de qualité (E) peut être enregistrée,
un dispositif de vérification (9), par le biais duquel une valeur de qualité (E) peut être affectée à la valeur caractéristique (K), et
une unité d'alarme (11), qui peut être commandée en fonction du résultat de l'affectation par le dispositif de vérification (9), et dans laquelle le signal de surveillance (U) peut être généré,
**caractérisé en ce que**
des moyens (15) de numérisation des valeurs d'amplitude (AM1, AM2) sont prévus et la valeur caractéristique (K) peut être calculée par la combinaison des valeurs d'amplitude numérisées dans le module de calcul (8), la valeur caractéristique (K) correspondant à une adresse mémoire de valeur caractéristique (Ks), qui peut être utilisée pour l'adressage d'un champ caractéristique au moins bidimensionnel dans l'unité de mémoire (10), les valeurs de qualité (E) étant enregistrées dans l'unité de mémoire (10).

12. Codeur selon la revendication 11, **caractérisé en ce que** les valeurs d'amplitude de la paire de signaux de mesure (P1) sont élevées au carré et les résultats additionnés.

13. Codeur selon l'une des revendications 11 ou 12, **caractérisé en ce que** la valeur de qualité (E) est lue de préférence par le dispositif de vérification (9) d'une mémoire déterminée par l'adresse mémoire de valeur caractéristique (Ks) de l'unité de mémoire (10).

14. Codeur selon la revendication 13, **caractérisé en ce qu'**un signal de vérification (V) représentatif pour le résultat de la vérification de la valeur caractéristique (K) par rapport à la valeur de qualité (E, E2) est appliqué à une sortie de signal du dispositif de vérification (9), le signal de vérification pouvant être fourni à l'unité d'alarme (11).

15. Codeur selon l'une des revendications 13 ou 14, **caractérisé en ce qu'**un signal de surveillance (U) dépendant du signal de vérification (V) peut être appliqué à la sortie de signal de l'unité d'alarme (11).
